# EUROPEAN PATENT APPLICATION

(11) **EP 2 267 231 A1**
(43) Date of publication of application: **29.12.2010**
(21) Application number: 10166913.3
(22) Date of filing: 22.06.2010
(51) Int. Cl.: E03B 11/14, B65D 88/76

(54) **An underground hydraulic tank**

(30) Priority: 22.06.2009 IT BO20090402
(71) Applicant: Rototec S.p.A., Lunano (IT)
(72) Inventor: Benzi, Paolo, 61048, Sant'Angelo in Vado (IT); Falconi, Mario, 61020, Lunano (IT)
(74) Representative: Jorio, Paolo

(57) **Abstract**

An underground hydraulic tank has a determined longitudinal axis (2; 20), is axially closed, is defined by two hollow containing elements (8, 11, 14, 24, 28, 31, 35) coupled together and extends along a non-rectilinear path (P; T).

## Description

The present invention relates to an underground hydraulic tank.

In particular, the present invention relates to an underground hydraulic tank for collecting, for example, rainwater or waste water.

The tank has a determined longitudinal axis, is axially closed, and comprises at least two hollow containing elements coupled together.

The prior art underground hydraulic tanks of the type described above have some drawbacks mainly deriving from the fact that such tanks only extend along a rectilinear path and are thus not very flexible or versatile, and also from the fact that relatively high capacities are only achieved with tanks installed in relatively long cavities.

The object of the present invention is to provide an underground hydraulic tank that overcomes the drawbacks described above and that is simple and inexpensive to manufacture.

According to the present invention there is provided an underground hydraulic tank as set forth in the appended claims

The present invention will now be described with reference to the accompanying drawings, which illustrate a non-limiting embodiment thereof, in which:
figure 1 is a schematic perspective view of a preferred embodiment of the tank according to the present invention;
figure 2 is a schematic perspective view of a detail of the tank of figure 1;
figure 3 is a schematic perspective view of a variant of the tank of figure 1;
figure 4 is a schematic perspective view of a detail of the tank of figure 3;
figures 5, 6 and 7 are schematic perspective views of three variants of the details of figures 2 and 4.

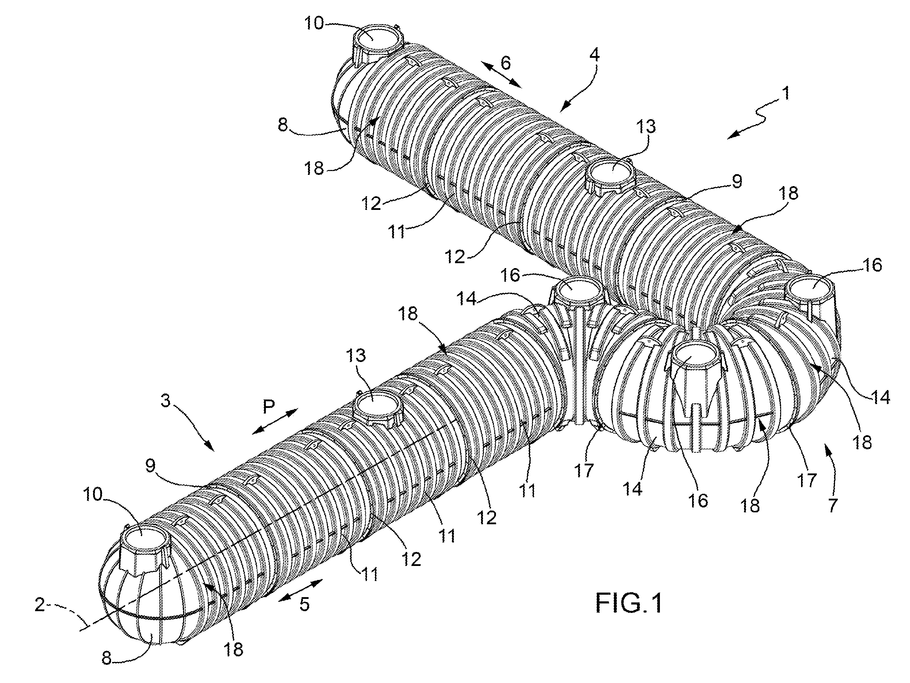

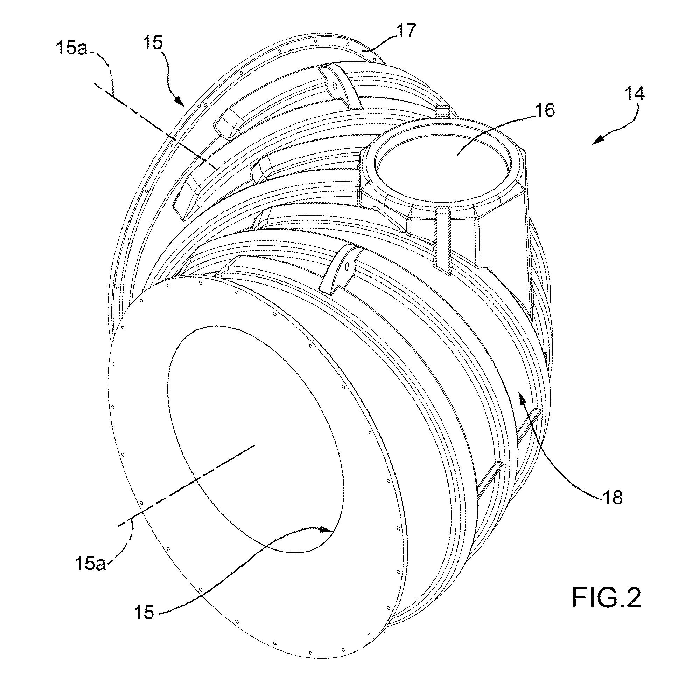

With reference to figures 1 and 2, designated as a whole by number 1 is an underground hydraulic tank for collecting, for example, rainwater or waste water.

The tank 1 has a substantially horizontal longitudinal axis 2, is axially closed, and extends along a non-rectilinear path P comprising two rectilinear sections 3, 4 arranged in two substantially transverse directions 5, 6 and a curved section 7 arranged between the two sections 3, 4.

Each section 3, 4 comprises a hollow containing end element 8, which has one closed end and one open end, is provided with an annular coupling element 9 radially protruding outwards from its open end, and has a vertical duct 10 for the inlet of liquid in the tank 1, and a plurality of intermediate hollow containing elements 11 (there are three elements 11 in the example that is illustrated), each of which has two open ends, and is provided with two annular coupling flanges 12 radially protruding outwards from its open ends.

One of the elements 11, the central element 11 in the example that is illustrated, has a vertical duct 13 for the inlet of the liquid in the tank 1 identical to the duct 10.

The section 7 comprises, in the example that is illustrated, three hollow containing elements 14, each of which has a curved shape, and extends between two ends 15 for the flow of liquid, which have respective longitudinal axes 15a arranged according to an angle other than 0° one with respect to the other, at an angle of 90° in the example that is illustrated, and are arranged in respective containment planes that intersect one another at an angle of 90°.

Each element 14 is axially open at the ends, is provided with a vertical duct 16 for the inlet of liquid in the tank 1 identical to the ducts 10 and 13, and is also provided with two annular coupling flanges 17 radially protruding outwards from the ends thereof.

The elements 8, 11 and 14 are limited by respective corrugated external surfaces 18, and are connected to one another in sequence by means of clamp screws (not illustrated) mounted through the relative flanges 9, 12 and 17 and/or welded to said relative flanges 9, 12 and 17.

According to a variant of the preferred embodiment that is not illustrated, the elements 8, 11 and 14 are closed, in correspondence with the flanges 9, 12 and 17, by means of respective stiffening walls substantially orthogonal to the axis 2, are assembled together, and hydraulically connected to one another via openings obtained through said stiffening walls.

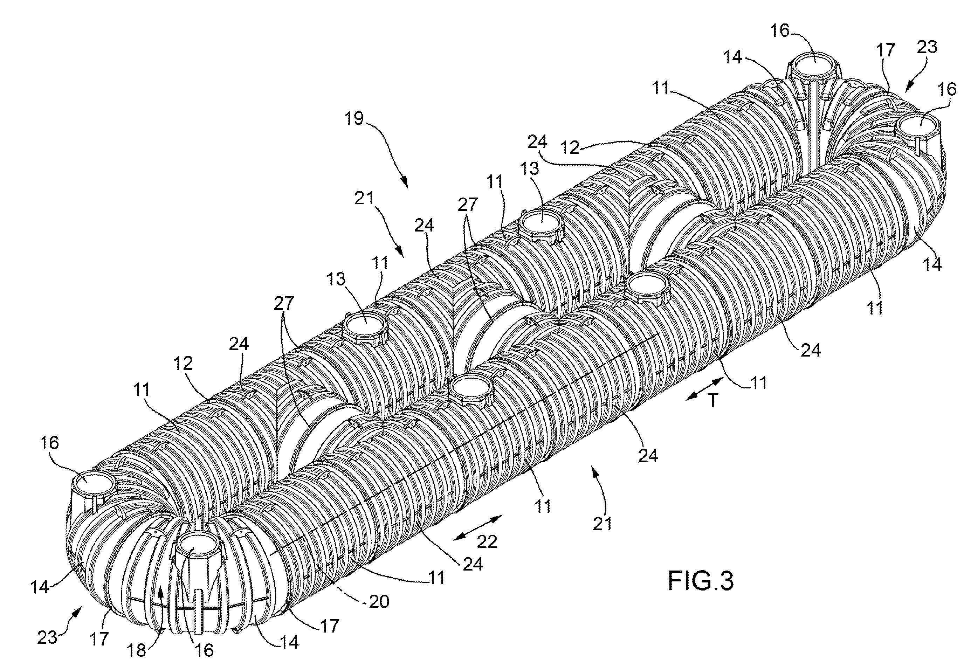

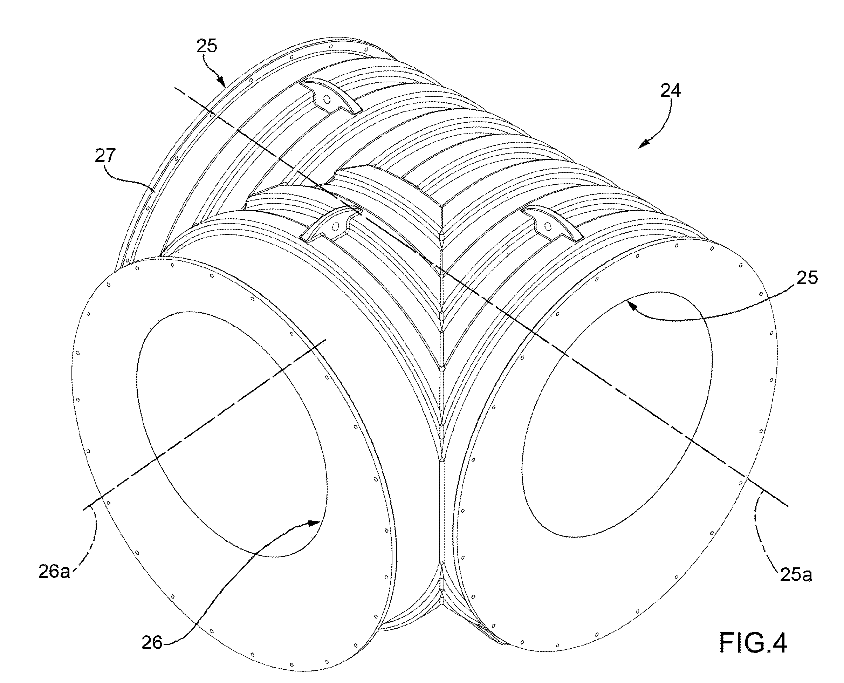

The variant illustrated in figures 3 and 4 relates to an underground hydraulic tank 19, which has a determined longitudinal axis, extends along a non-rectilinear closed loop path T, and comprises two rectilinear branches 21 parallel to one another and to a determined direction 22 and two curved branches 23, which join said branches 21, and each of which comprises two respective containing elements identical to the elements 14.

Each branch 21 comprises, in the example that is illustrated, four containing elements identical to the elements 11, and three hollow containing elements 24, each of which is arranged between two elements 11, is T-shaped, extends between two ends 25 for the flow of liquid which are arranged coaxially with respect to one another and with a longitudinal axis 25a thereof, and each of which is provided with a third end 26 for the flow of liquid, which has a longitudinal axis 26a arranged transversely with respect to the axis 25a, and is arranged in a containment plane orthogonal to the containment planes of the ends 25.

Each end 25, 26 has an annular coupling flange 27 radially protruding outwards from the relative end 25, 26, and is connected to an adjacent element 11 or to a corresponding element 24 of the other branch 21 according to the same method of coupling described for the tank 1.

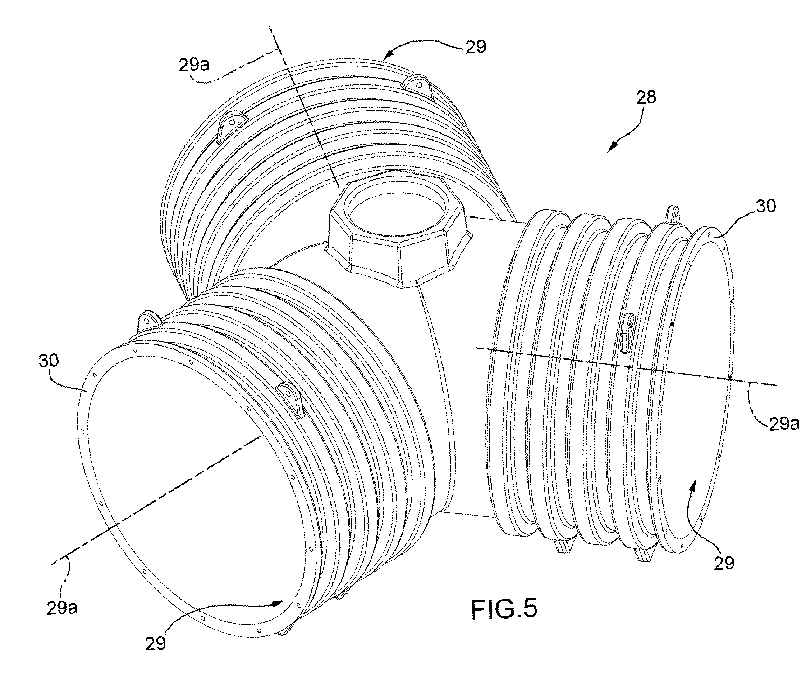

The variant illustrated in figure 5 relates to a hollow containing element 28 provided with three ends 29 for the flow of liquid, which have respective longitudinal axes 29a arranged at an angle of 60° with respect to one another, are coplanar with respective containment planes arranged at an angle of 60° with respect to one another, and each of which comprises a respective annular coupling flange 30 radially protruding outwards from the relative end 29.

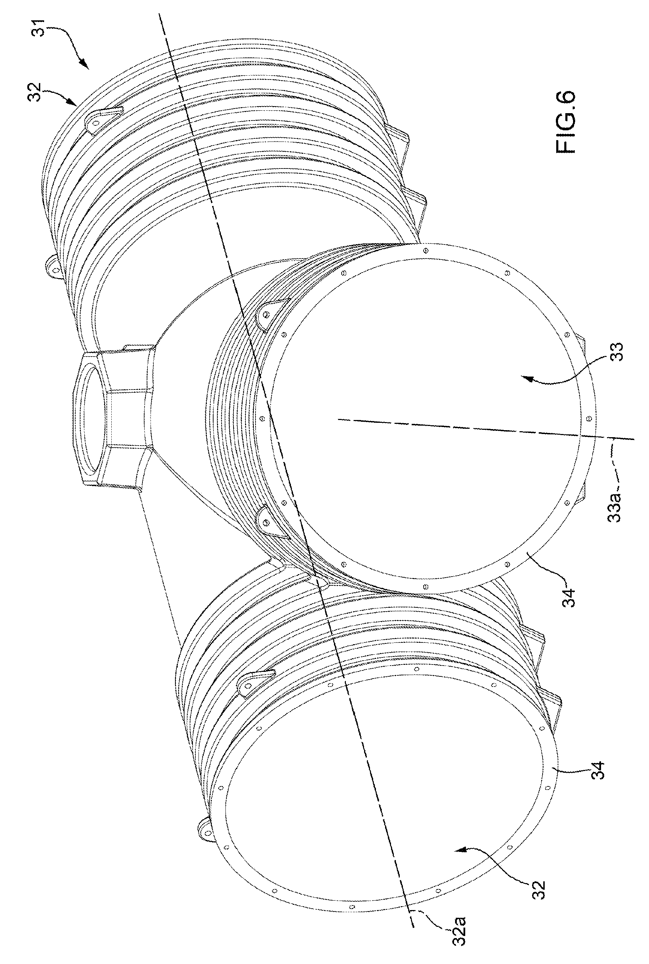

The alternative embodiment illustrated in figure 6 relates to a hollow containing element 31 provided with two ends 32 for the flow of liquid which are arranged coaxially with respect to one another and with a longitudinal axis 32a thereof and a third end 33 for the flow of liquid, which has a longitudinal axis 33a arranged at an angle of 30° with respect to the axis 32a, and is coplanar with a containment plane arranged at an angle of 30° with respect to the containment planes of the ends 32.

Each end 32, 33 is provided with an annular coupling flange 34 radially protruding outwards from said end 32, 33.

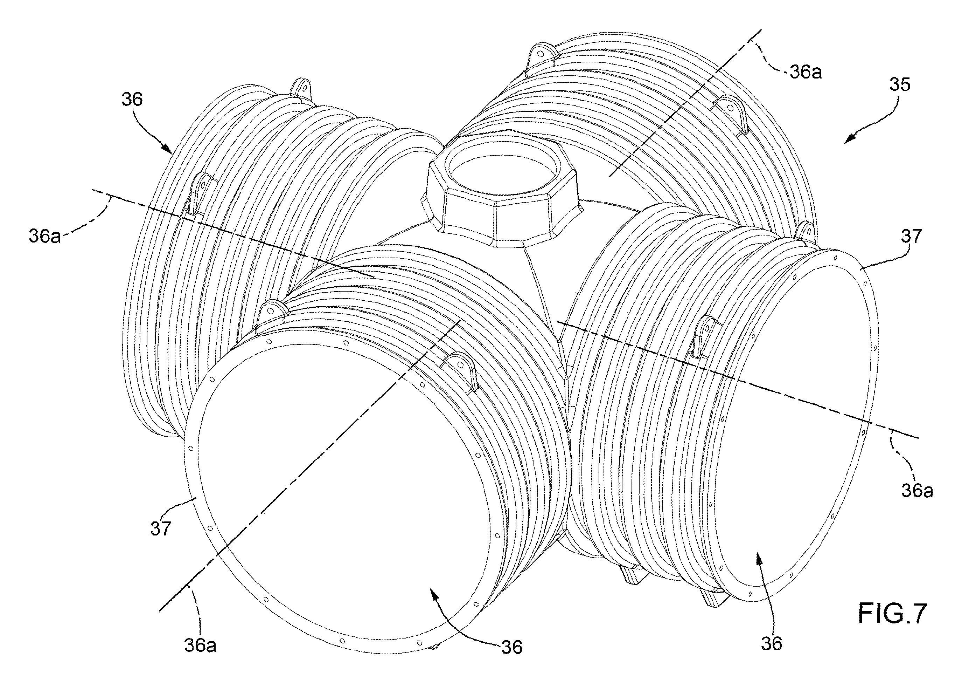

The alternative embodiment illustrated in figure 7 relates to a hollow containing element 35 provided with four ends 36 for the flow of liquid, which have respective longitudinal axes 36a arranged at 90° with respect to one another, are coplanar with respective containment planes arranged at an angle of 90° with respect to one another, and each of which comprises a respective annular coupling flange 37 radially protruding outwards from the relative end 36.

In connection with the above description it is important to note that each element 8, 11, 14, 24, 28, 31, and 35 is made by a rotational moulding process.

## Claims

1. An underground hydraulic tank, the tank having a determined longitudinal axis (2; 20), being axially closed, and comprising at least two hollow containing elements (8, 11, 14, 24, 28, 31, 35) coupled together; and being **characterised in that** the tank extends along a non-rectilinear path (P; T).

2. The tank according to claim 1, wherein at least one of said containing elements (14, 24, 28, 31, 35) extends between two ends (15, 25, 26, 29, 32, 33, 36) for the flow of liquid having respective longitudinal axes (15a, 25a, 26a, 29a, 32a, 33a, 36a) arranged according to an angle other than 0° one with respect to the other.

3. The tank according to claim 1 or 2, wherein each of said containing elements (8, 11, 14, 24, 28, 31, 35) is made by a rotational moulding process.

4. The tank according to any of the preceding claims, further comprising coupling means (9, 12, 17, 27, 30, 34, 37) for sealingly connecting said containing elements (8, 11, 14, 24, 28, 31, 35).

5. The tank according to claim 4, wherein the coupling means (9, 12, 17, 27, 30, 34, 37) comprise, for each containing element (8, 11, 14, 24, 28, 31, 35), at least one respective flange (9, 12, 17, 27, 30, 34, 37) radially protruding outwards from the containing element (8, 11, 14, 24, 28, 31, 35), and locking means to lock two adjacent flanges (9, 12, 17, 27, 30, 34, 37) together.

6. The tank according to claim 5, wherein the flanges (9, 12, 17, 27, 30, 34, 37) are locked together by welding.

7. The tank according to claim 5 or 6, wherein the flanges (9, 12, 17, 27, 30, 34, 37) are locked together by clamp screws.

8. The tank according to any of the preceding claims, wherein at least one of said containing elements (8, 11, 14, 24, 28, 31, 35) has a top opening (10, 13, 16) for the inlet of liquid in the tank.

9. The tank according to any of the preceding claims, wherein at least one of said containing elements (14) has a curvilinear shape.

10. The tank according to any one of claims 1 to 8, wherein at least one of said containing elements (24, 28, 31, 35) has at least three reciprocally distinct ends (25, 26, 29, 32, 33, 36) for the flow of liquid.
